# DEMANDE DE BREVET EUROPEEN

(11) **EP 3 660 131 A1**
(43) Date de publication de la demande: **03.06.2020**
(21) Numéro de dépôt: 19212230.7
(22) Date de dépôt: 28.11.2019
(51) Int. Cl.: C10B 53/02, C10G 1/06, C10G 1/08, C10G 3/00

(54) **PROCÉDÉ D'OBTENTION D'UN BIOBRUT PAR PYROLYSE ET HYDROLIQUEFACTION D'UNE BIOMASSE**

(30) Priorité: 29.11.2018 FR 1872088
(71) Demandeur: Commissariat à l'énergie atomique et aux énergies alternatives, 75015 Paris (FR)
(72) Inventeur: CASTELLI, Pierre, 38054 GRENOBLE CEDEX 09 (FR); BOISSONNET, Guillaume, 38054 GRENOBLE CEDEX 09 (FR)
(74) Mandataire: Brevalex

(57) **Abrégé**

L'invention se rapporte à un procédé de valorisation de la biomasse, en biobrut, par exemple, en tant que substitut du fioul, ou en biocarburant.

Ce procédé de comprend au moins les étapes successives suivantes :
a) étape de pyrolyse de la biomasse, à une température allant de 400°C à 550°C, conduisant à la formation de trois fractions : un résidu carboné, une phase gazeuse incondensable, et une bio-huile,
b) étape de mélange du résidu carboné et de la bio-huile, obtenus à l'étape a), de manière à former une suspension,
c) étape d'hydroliquéfaction de la suspension, en présence de dihydrogène, à une température allant de 250°C à 450°C et sous une pression de 10MPa à 25MPa, moyennant quoi on obtient un biobrut.

## Description

### DOMAINE TECHNIQUE

La présente invention se rapporte au domaine de la valorisation de la biomasse en carburant liquide (biobrut et biocarburant) ou combustible, notamment en tant que carburant maritime, carburant avancé ou en tant que substitut du fioul traditionnellement utilisé dans les chaudières.

Plus spécifiquement, elle se rapporte à un procédé d'obtention d'un biobrut, par pyrolyse de la biomasse puis hydroliquéfaction (hydrogénation en phase liquide) d'un mélange comprenant le résidu carboné et la bio-huile issus de l'étape de pyrolyse.

### ÉTAT DE LA TECHNIQUE ANTÉRIEURE

La biomasse représente l'une des ressources renouvelables les plus abondantes sur terre et, certainement, l'une des moins coûteuses.

La valorisation de la biomasse en biocombustibles/biocarburants aptes à remplacer les combustibles/carburants d'origine fossile est devenue un enjeu majeur. Pour cela, il est nécessaire d'avoir un procédé de transformation afin d'abaisser la teneur en oxygène de la biomasse et d'augmenter sa teneur en hydrogène.

Différents procédés de transformation de la biomasse en biocarburant sont présentés dans l'article de Seiler et al. («Technical and economical evaluation of enhanced biomass to liquid fuel processes », Energy, 35, 3587-3592, (2010)).

Actuellement, la plupart des procédés, en cours d'étude ou à l'échelle de pilote, mettent en œuvre une synthèse de Fischer Tropsch comprenant une étape de gazéification de la biomasse à la vapeur d'eau pour obtenir un gaz de synthèse composé essentiellement du monoxyde de carbone (CO) et de dihydrogène (H₂). A partir de CO et d'H₂, il est alors possible d'obtenir des chaines d'hydrocarbures CH₂ semblables à celles provenant des hydrocarbures d'origine fossile.

Cette gazéification est réalisée préférentiellement, soit dans un réacteur à lit fluidisé, soit dans un réacteur à flux entrainé.

Les lits fluidisés nécessitent uniquement un séchage et un broyage de granulométrie moyenne de la biomasse. Cependant, ils sont d'une efficacité moindre en raison de la température de réaction comprise généralement entre 800°C et 1000°C, qui conduit à une conversion moindre de la biomasse en CO+H₂ (notamment à cause de la génération de méthane CH₄ et de goudrons).

Les réacteurs à flux entrainé ont un excellent rendement de conversion de la biomasse en CO+H₂ et sont donc tout à fait appropriés à la production de carburants ou produits chimiques de synthèse à partir de la biomasse. Ils servent donc de référence dans le domaine des carburants de type BtL (en anglais « Biomass to Liquid »). Cependant, ils nécessitent un prétraitement thermique (torréfaction) de la biomasse afin de la broyer finement pour pouvoir l'injecter facilement, ce qui introduit une perte de matière, ce qui peut faire baisser le rendement en carburant, ou une perte d'énergie pour le procédé. Par ailleurs, du fait, d'un niveau de température élevé de l'ordre de 1500°C, l'apport de chaleur du procédé est apporté en général par la combustion d'une partie de la biomasse (biomasse brut, gaz produits ou recyclés, résidus solides, goudrons...). Le procédé est dit autothermique. Cependant, une partie du carbone de la biomasse n'est donc pas convertie en biocarburant, ce qui réduit le rendement de conversion.

Une autre solution technologique attractive consiste à réaliser une hydroconversion de la biomasse en présence de dihydrogène et d'un catalyseur, pour augmenter sa teneur en hydrogène et réduire sa teneur en oxygène. Au cours de ce traitement, les réactions mises en jeu sont des réactions de déoxygénation (décarbonylation (-CO), décarboxylation (-CO₂) et d'hydrodéoxygénation (-H₂O)) : les composés organiques oxygénés présents sont dégradés et forment de l'eau et des hydrocarbures.

Le document WO2012/140335 décrit, par exemple, un procédé d'hydroconversion de la biomasse comprenant les étapes suivantes :
- une étape de préparation d'une suspension de particules de biomasse dans un solvant, comme la tétraline ou des molécules naphténo-aromatiques,
- une étape d'hydroconversion en présence de dihydrogène dans au moins un réacteur contenant un catalyseur supporté en lit bouillonnant, à une pression de 2 à 35MPa et à une température de 300 à 400°C, et
- une étape d'hydroconversion en présence de dihydrogène dans au moins un réacteur contenant un catalyseur dispersé, à une pression de 2 à 35MPa et à une température de 300 à 450°C.

Même si ce procédé présente de bons taux de conversion, ce procédé nécessite d'utiliser deux réacteurs en série (un réacteur en lit bouillonnant et un réacteur et un réacteur contenant un catalyseur en phase dispersée). De plus, il est nécessaire de préparer la biomasse en réalisant une étape de séchage et/ou de torréfaction (entre 200°C et 300°C, pendant 15 à 120 minutes) puis une étape de broyage pour obtenir des particules de biomasse ayant une taille inférieure à 600µm. Ces étapes augmentent la complexité du procédé, consomment de l'énergie et peuvent augmenter l'investissement et les coûts d'exploitation du procédé.

Ces dernières années, un certain nombre de procédés de pyrolyse, notamment des procédés de pyrolyse dite « rapide » ou « flash », ont été développés pour permettre de transformer la biomasse en matière valorisable. Préalablement à l'étape de pyrolyse, la biomasse est grossièrement broyée. Le procédé de pyrolyse est, par exemple, réalisé avec un lit fluidisé ou avec une double vis.

La pyrolyse rapide consiste à soumettre la biomasse à des températures élevées, généralement entre 400 et 650°C, et préférentiellement autour de 500-550°C, pendant 1 à 10 secondes, dans un environnement pauvre ou dépourvu d'oxygène, pour éviter l'oxydation. Dans ces conditions, la matière se déshydrate puis subit une thermolyse, c'est-à-dire une décomposition thermique. A l'issue du procédé de pyrolyse, on obtient trois types de composés :
- des gaz incondensables comprenant, entre autres du monoxyde de carbone (CO), du dioxyde de carbone (CO₂), du dihydrogène (H₂), du méthane (CH₄),
- des résidus solides carbonés que l'on regroupe sous les noms de « char », « charbon végétal », « coke » ou encore « coke pyrolitique », et
- une phase liquide organique condensable, typiquement de couleur brun foncé, comprenant une bio-huile de pyrolyse, aussi nommée « bio-huile pyrolytique », « huile de pyrolyse » ou « huile pyrolytique » et qui sera appelée plus simplement « bio-huile » dans ce qui suit.

La répartition de ces trois fractions dépend de la température et de la vitesse de la pyrolyse (Bridgwater et al. (« Review of fast pyrolysis of biomass and product upgrading », Biomass and Bioenergy 38 (2012), 68-94)). Pour maximiser la fraction condensable, et par exemple obtenir 75% de liquide, la pyrolyse doit être effectuée à température autour de 500°C, avec un temps de séjour d'environ une seconde.

Des températures autour de 500-550°C permettent de favoriser l'obtention de la fraction condensable. Une température élevée jusqu'à 1000°C permet de favoriser la production de gaz, alors qu'une température basse (300 à 400°C) avec un temps de séjour long permet de favoriser la production de char.

Cependant, les bio-huiles ainsi obtenues ont une composition qualitative et quantitative qui varie en fonction de la biomasse à partir de laquelle elles sont produites ainsi que des conditions de pyrolyse et de condensation. A l'issue de l'étape de pyrolyse, la bio-huile est donc séparée des autres constituants puis raffinée isolément, par un procédé physique, chimique ou catalytique.

Compte-tenu de ce qui précède, un enjeu est donc de fournir un procédé permettant de convertir très efficacement la biomasse en biocombustible/biocarburant de façon simple, rapide, peu coûteuse et avec un impact faible, voire nul, sur l'environnement, y compris dans le cadre d'une mise en œuvre à une échelle industrielle.

### EXPOSÉ DE L'INVENTION

L'invention a justement pour objet de fournir un procédé de valorisation de la biomasse qui répond à toutes ces exigences.

Le procédé de valorisation de la biomasse en biobrut comprend au moins les étapes successives suivantes :
a) étape de pyrolyse de la biomasse, à une température allant de 400°C à 550°C, conduisant à la formation de trois fractions : un résidu carboné, une phase gazeuse incondensable, et une bio-huile,
b) étape de mélange du résidu carboné et de la bio-huile, obtenus à l'étape a), de manière à former une suspension,
c) étape d'hydroliquéfaction de la suspension, en présence de dihydrogène, à une température allant de 250°C à 450°C et sous une pression de 10MPa à 25MPa, moyennant quoi on obtient un biobrut.

Le procédé se distingue fondamentalement de l'art antérieur en ce qu'il comprend, dans un premier temps, une étape de pyrolyse puis une étape d'hydroliquéfaction, l'étape d'hydroliquéfaction étant réalisée sur le mélange du résidu carboné (char) et de la bio-huile issus de l'étape de pyrolyse.

Le procédé ne nécessite pas de préparation particulière de la biomasse (torréfaction, séchage, broyage fin, etc), contrairement aux procédés de l'art antérieur utilisant un gazéifeur.

La bio-huile, en plus d'être valorisée, joue, en même temps, le rôle de fluide porteur, facilitant l'homogénéisation du milieu réactionnel.

Avantageusement, la suspension soumise à l'étape d'hydroliquéfaction est constituée du char, de la bio-huile et, éventuellement, d'un solvant.

Avantageusement, l'étape c) est réalisée sans solvant. Il n'y a pas besoin de rajouter de solvant puisque l'huile de pyrolyse permet de former la suspension, ce qui réduit les coûts du procédé et son impact écologique par rapport à un procédé utilisant des solvants organiques, comme la tétraline.

Avantageusement, l'étape c) est réalisée sans catalyseur, ce qui réduit les coûts du procédé.

Selon une alternative, l'étape c) est réalisée avec un catalyseur, pour améliorer les cinétiques de réaction.

Avantageusement, la température de l'étape c) va de 300°C à 350°C.

Avantageusement, la pyrolyse de l'étape a) dure de 0,5 à 10 secondes.

Avantageusement, la température de l'étape de pyrolyse est de 500°C.

Avantageusement, le biobrut obtenu à l'étape d) est raffiné en biocarburant.

Avantageusement, l'étape de raffinage produit des gaz légers, au moins une partie des gaz légers étant recyclée vers l'étape de pyrolyse et/ou étant soumise à une étape de craquage et/ou de reformage, moyennant quoi on forme du dihydrogène pouvant être recyclé vers l'étape d'hydroliquéfaction.

Avantageusement, la phase gazeuse incondensable obtenue à l'étape a) comprend du méthane et des hydrocarbures légers, le méthane et les hydrocarbures étant soumis à une étape de craquage, moyennant quoi on forme du dihydrogène pouvant être recyclé vers l'étape d'hydroliquéfaction.

Avantageusement, au moins une partie du dihydrogène utilisé pour l'étape d'hydroliquéfaction provient d'une électrolyse de l'eau, ce qui permet d'augmenter le rapport molaire C/H dans le procédé et donc le rendement de conversion du carbone.

Le procédé de valorisation de la biomasse de l'invention présente de nombreux avantages :
- être simple à mettre en œuvre;
- consommer peu de matières premières et produire très peu de déchets du fait notamment de la possibilité de recycler les produits issus du procédé, ce qui est aussi très intéressant, non seulement d'un point de vue économique mais également environnemental ; ainsi, la mise en œuvre du procédé peut s'effectuer en circuit quasi autonome par l'optimisation de son intégration énergétique.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES FIGURES

La présente invention sera mieux comprise à la lecture de la description d'exemples de réalisation donnés à titre purement indicatif et nullement limitatif en faisant référence aux dessins annexés sur lesquels :
La figure 1 illustre schématiquement les différentes étapes d'un procédé de transformation en partant de la biomasse jusqu'au raffinage du biobrut selon un mode de réalisation particulier de l'invention,
La figure 2 illustre schématiquement les différentes étapes d'un procédé de transformation en partant de la biomasse jusqu'au raffinage du biobrut selon un autre mode de réalisation particulier de l'invention.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE MISE EN ŒUVRE PARTICULIERS

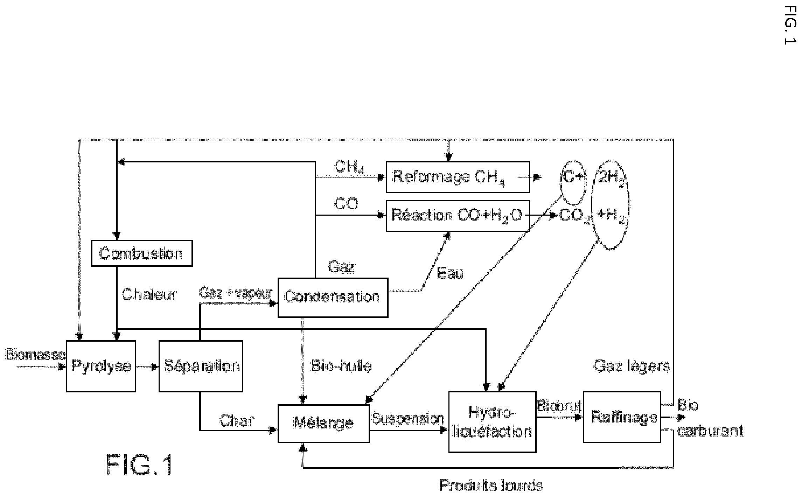

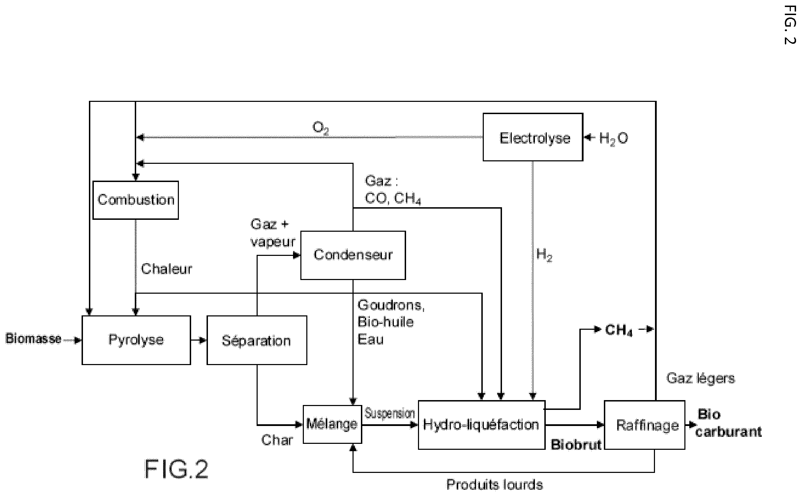

On se réfère aux figures 1 et 2 qui illustrent schématiquement les différentes étapes de la valorisation de la biomasse, dans un premier temps, en biobrut, puis éventuellement, moyennant une étape de raffinage en biocarburant.

### Pyrolyse de la biomasse :

Dans une première étape, la biomasse est soumise à une étape de pyrolyse.

Par biomasse, on entend des matériaux carbonés d'origine végétale (biomasse lignocellulosique et les algues) ou d'animale. Il peut s'agir de déchets provenant d'exploitations forestières et d'industries de transformation du bois (telles que les scieries, entreprises de déroulage, menuiseries, panneautiers, etc), de résidus agricoles (tels que la paille et les enveloppes de grains de céréales), de l'industrie agro-alimentaire ou encore de déchets ménagers ou industriels.

La biomasse peut être humide ou quasiment sèche. Elle comprend de préférence moins de 50% d'eau. Par exemple, la biomasse peut avoir une humidité inférieure à 10%. Elle peut être de toute forme, par exemple sous la forme de plaquettes forestières, ou de granulés, ou encore déchiquetée dont les formes et dimensions sont compatibles avec le pyrolyseur (quelques cm pour un lit fluidisé ou une vis, par exemple). Dans un procédé de transformation de la biomasse en gaz (BtG « Biomass to Gas »), la biomasse peut avoir des dimensions inférieures à 6mm et une humidité inférieure à 10%.

Des charges, de préférence solide, peuvent être ajoutées seules ou en mélange. Il peut s'agir de charges d'origine animale, végétale, de déchets agricoles ménagers ou industriels, de pneus usagés ou résidu pétrolier par exemple. De préférence, il s'agit d'une fraction recyclée, de préférence solide, issue du procédé.

La pyrolyse est une étape de décomposition thermique de la biomasse en l'absence d'oxygène ou en atmosphère pauvre en oxygène. La pyrolyse de la biomasse permet d'obtenir trois fractions :
- une fraction incondensable (H₂, CO, CO2, CH₄, C2....)
- une fraction condensable (bio-huile), et
- une fraction solide : le résidu carboné appelé char.

La bio-huile peut contenir des goudrons (ou « tar » en terme anglo-saxon). Il s'agit d'une phase dite lourde comprenant des molécules hydrocarbonées condensables, aliphatique ou ayant un ou plusieurs cycles aromatiques et, par exemple, pouvant atteindre une masse molaire supérieure à 100g/mol. Il peut s'agir d'hydrocarbures aromatiques polycycliques (ou HAP) tel que le naphtalène, l'anthracène, etc. La bio-huile peut également contenir une fraction d'eau miscible jusqu'à environ 25%.

Pour maximiser la quantité de fraction solide et condensable obtenue, la pyrolyse est effectuée à température supérieure à 400°C, de préférence de 400°C à 550°C, et encore plus préférentiellement d'environ 500°C.

Le temps de séjour de la biomasse dans le réacteur de pyrolyse est rapide, de l'ordre de quelques secondes. Par exemple, pour avoir un rendement élevé, on utilisera un temps de séjour de 0.5 à 10 secondes.

Ce traitement thermique peut être réalisé dans tout pyrolyseur dont le réacteur (four de pyrolyse) est conçu pour supporter des températures allant au moins jusqu'à 550°C et des pressions proches de la pression atmosphérique.

Le réacteur de pyrolyse est, par exemple, choisi parmi un lit fluidisé dense, un lit fluidisé circulant, un cône rotatif, une double vis, un vortex ou cyclone, et un système ablatif. De préférence, il s'agit d'un lit fluidisé ou d'une double-vis.

### Séparation des fractions issues de l'étape de pyrolyse :

A l'issue de l'étape de pyrolyse et avant refroidissement, la fraction incondensable et la fraction condensable sont sous forme gazeuse, le résidu carboné est sous forme solide. Il est possible de séparer les trois phases les unes des autres.

De préférence, dans un premier temps, la phase solide et la phase gaz à chaud (contenant les fractions condensables et incondensables), est séparée du char. Ensuite, on sépare la phase incondensable de la phase condensable. Une telle séparation peut être obtenue en réduisant la température avec un procédé de type trempe (« quench »), jusqu'à faire condenser la phase condensable, pour éviter le craquage des molécules lourdes et la production de gaz. Cette séparation est, avantageusement, rapide pour éviter les réactions chimiques secondaires et ainsi obtenir un haut rendement en bio-huile.

Le séparateur gaz -solide est par exemple un séparateur cyclonique (ou cyclone). La température de fonctionnement est choisie manière à éviter la condensation des vapeurs les plus lourdes (les bio-huiles), mais suffisamment basses pour limiter les réactions de craquage et maturation (entre 400 et 450°C).

### Condensation de la phase condensable :

En sortie du séparateur, la phase gazeuse comprend des vapeurs condensables, des aérosols, des produits gazeux incondensables et, éventuellement, un gaz vecteur. Les vapeurs condensables sont refroidies rapidement pour minimiser les réactions secondaires de craquage, puis condensées tandis que les aérosols sont récupérés par coalescence ou agglomération, les fines particules solides, entrainées par le gaz, peuvent être piégées par un filtre.

Les vapeurs condensables sont, par exemple, refroidies jusqu'à la température ambiante (de l'ordre de 20-25°C), pour former une fraction liquide (bio-huile + phase aqueuse). La condensation est préférentiellement réalisée à pression atmosphérique (environ 1bar). La bio-huile peut être séparée d'une partie de la phase aqueuse par une condensation étagée avec plusieurs niveaux de température de refroidissement. La séparation peut être réalisée, par exemple par filtration, centrifugation, décantation pour la fraction d'eau non miscible, ou éventuellement par une étape d'hydrodéoxygénation (HDO).

On pourra utiliser un condenseur ou plusieurs condenseurs en série.

Les condenseurs peuvent être des condenseurs dits classiques et/ou des systèmes de trempe.

Les condenseurs classiques sont des condenseurs de type échangeurs thermiques conduisant à une condensation des vapeurs de chaque espèce sur les parois froides, en fonction des températures de saturation. Les composés les plus lourds sont trop visqueux pour être collectés simplement par gravité. La principale conséquence est le risque de bouchage du condenseur lors d'un usage prolongé. La dilution des produits dans un gaz vecteur inerte est également problématique puisque les tensions de vapeur sont abaissées (perte de vapeurs légères).

Les systèmes de trempe, par la bio-huile déjà condensée ou dans un solvant, permettent de s'affranchir de ces problèmes de bouchage. Ils consistent en général en un contact direct gaz/liquide (type colonne à plateaux par exemple ou aspergée de solvant) avec un solvant ou la bio-huile refroidie à température ambiante qui assure l'effet de trempe. La bio-huile produite, qui est refroidie, peut servir à asperger à contre-courant le gaz chaud pour condenser la bio-huile contenue dans le gaz.

Le choix du solvant dépend de l'utilisation que l'on veut faire des huiles. Un solvant non miscible et d'une densité différente des huiles est préférable pour faciliter la récupération des huiles en vue d'analyses et de bilans de matière.

### Mélange du char et de la phase organique liquide condensable :

Lors de l'étape b), on mélange intimement le résidu carboné (char) et la bio-huile (comprenant les goudrons ou dépourvue des goudrons) issus de l'étape de pyrolyse pour obtenir une suspension (« slurry »).

Le char et la bio-huile sont, par exemple, mélangés dans un malaxeur ou mélangeur.

Eventuellement, le char peut être broyé, grossièrement ou finement, afin d'obtenir une suspension plus homogène. L'étape de broyage peut être réalisée, avant ou après, le mélange avec la bio-huile.

La phase solide de la suspension est, de préférence, constituée du char.

Avantageusement, préalablement, à l'étape b), on sépare au maximum l'eau non miscible de l'huile. La proportion d'eau finale peut aller de 1% à la dizaine de pourcent (par exemple 15%).

La suspension a une densité énergétique supérieure à celle de la ressource initiale. La suspension est sous forme liquide, facile à stocker. Elle peut être pompée et injectée facilement, contrairement aux poudres de biomasse utilisées pour les dispositifs de gazéification, tels que les réacteurs à Flux Entrainé (RFE).

### Hydroliquéfaction de la suspension :

La suspension comprenant le char et la bio-huile est soumise à une étape d'hydroliquéfaction.

La suspension pourrait contenir un solvant, par exemple pour fluidifier la suspension ou abaisser le taux d'oxygène. On évitera d'utiliser les solvants à base d'eau qui contiennent de l'oxygène. On pourra utiliser des solvants organiques de type hydrocarbure. Il peut s'agir d'une huile végétale. De préférence, il s'agit d'une fraction liquide issue du procédé. La fraction ajoutée ou recyclée est variable, elle peut aller de 10 à 20%.

Avantageusement, la suspension est dépourvue de solvant. La bio-huile forme la phase liquide de la suspension.

De préférence, la suspension est constituée du char, de la bio-huile et, éventuellement, d'un solvant.

Autrement dit, selon une première variante de réalisation préférée, la suspension est constituée du char et de la bio-huile.

Selon une deuxième variante de réalisation préférée, la suspension est constituée du char, de la bio-huile et d'un solvant.

La suspension est injectée dans le réacteur.

La suspension peut être injectée sous pression en mélange avec le dihydrogène, dans le réacteur. La suspension est, par exemple, injectée sous une pression allant de 10 à 25MPa, par exemple de l'ordre de 20MPa, avec du dihydrogène dans un réacteur chauffé à une température allant de 250 à 450°C.

Selon une variante, le dihydrogène et la suspension sont injectés séparément dans le réacteur. En fonction de sa viscosité, la suspension peut être préalablement préchauffée pour faciliter le pompage et l'injection dans le réacteur.

La stœchiométrie théorique pour le produit final est d'environ 2 moles d'hydrogène pour 1 mole de carbone. La formule moyenne de la biomasse lignocellulosique étant C₆H₉O₄, il est théoriquement possible de produire approximativement 4CH₂+2CO₂ à partir d'une mole de bois, par exemple.

L'étape d'hydroliquéfaction est réalisée dans un réacteur, par exemple longitudinal, conçu pour supporter des températures allant au moins jusqu'à 450°C et des pressions allant au moins jusqu'à 25 MPa. Ce réacteur comprend, par exemple, un agitateur mécanique, des lignes d'injection pour la suspension et l'hydrogène, un système de chauffage (interne ou externe) du réacteur, éventuellement un système de refroidissement car certaines réactions avec H₂ sont exothermiques, un système de régulation de la pression (déverseur, vanne de réglage asservie), une ligne de sortie, un séparateur liquide (biobrut)/gaz.

Par exemple, le réacteur comprend une entrée de réactif (suspension), et une sortie de biobrut. Le réacteur peut également comprendre une sortie de gaz (par exemple de CH₄). Lorsque l'hydrogène est introduit séparément de la suspension, le réacteur comprend une entrée de dihydrogène.

Le réacteur peut en outre, comprendre des moyens configurés pour mélanger la suspension et l'hydrogène.

La réaction d'hydroliquéfaction peut être réalisée en présence d'un ou plusieurs catalyseurs, par exemple choisis parmi Fe, Mo, Ni, W, Co, V, Ru, Rh, Pt, Mo et Pd. Le ou les catalyseurs peuvent être en phase dispersée (avantageusement mélangé à la suspension, avant ou après son introduction dans le réacteur) ou bien supportés, par exemple, sur un support minéral oxydé (alumine, silice, magnésie..). L'utilisation d'un catalyseur favorise les réactions chimiques et permet un meilleur rendement pour des conditions données. Elle permet d'orienter les réactions pour obtenir des chaines organiques proches de celle du pétrole.

Préférentiellement, on opère cette étape sans catalyseur.

Encore plus préférentiellement, cette étape est réalisée sans catalyseur et sans solvant.

Le dihydrogène nécessaire à l'étape d'hydroliquéfaction peut provenir du dihydrogène recyclé, provenant de la transformation de la phase gazeuse incondensable, et/ou d'un apport de dihydrogène extérieur afin d'augmenter le rapport C/H et le rendement matière.

En sortie du réacteur d'hydroliquéfaction, on obtient un « biobrut ». Le biobrut peut servir pour des applications maritimes, par exemple pour des moteurs de bateau, éventuellement moyennant une étape de mise en conformité du biobrut aux spécificités des formulations classiquement utilisées pour de telles applications.

Si le biobrut est dépourvu d'oxygène, ou après une éventuelle étape de hydrodéoxygénation, il pourra être distillé pour produire des coupes carburant. En fonction des températures de condensations, il est possible de séparer le méthane, le kérosène, le fuel et le fuel lourd.

### Raffinage du biobrut :

Le biobrut obtenu par le procédé peut être soumis à des post-traitements permettant de le raffiner en biocarburant. Le raffinage peut être réalisé par exemple avec un procédé de distillation. La distillation conduit à la séparation des différents composants du mélange liquide en fonction de leur température d'ébullition, en commençant par les composés les plus volatils (méthane, butane, propane), puis essence, kérosène, gazole, fioul domestique et enfin fioul lourd et bitume.

L'invention permet d'obtenir un « pétrole vert » à partir de biomasse en vue de la fabrication d'un biocarburant de deuxième génération.

### Production de dihydrogène et de chaleur :

D'une manière générale, les gaz incondensables (CO, CO₂, H₂, CH4, etc), issus des différentes étapes du procédé (pyrolyse et/ou raffinage), peuvent être valorisés en dihydrogène nécessaire à l'étape d'hydroliquéfaction, en gaz pour l'étape de pyrolyse, et/ou en chaleur.

Le méthane et les hydrocarbures légers (C₂H₂, CH4, C₂H₆, etc) peuvent être réformés/craqués thermiquement pour former un mélange de CO et H₂ ou du carbone et de l'hydrogène. L'étape de craquage est, par exemple, réalisée à 1200°C.

Le CO peut être transformé par la réaction du gaz à l'eau inverse (ou RWGSR pour « Reverse Water Gas Shift Reaction ») : CO + H₂O →H₂+CO₂.

Le carbone produit peut être, avantageusement, ajouté à la suspension. La transformation des gaz incondensables en dihydrogène peut être réalisée, par exemple, après une étape de séparation.

Une réinjection de dihydrogène à l'étape d'hydroliquéfaction, peut avantageusement permettre de déplacer l'équilibre vers une maximisation de la production de liquide valorisable en biobrut.

Alternativement ou simultanément, au moins une partie ou la totalité du dihydrogène, nécessaire au procédé, peut être produit par électrolyse alcaline ou par électrolyse à haute température. Ceci permet, avantageusement, de produire simultanément du dioxygène, pouvant alimenter une chaudière brulant la biomasse, dont la chaleur peut être utilisée pour chauffer le pyrolyseur et/ou le réacteur d'hydroliquéfaction par exemple. Le dihydrogène dit électrolytique permet d'améliorer le rendement de matière et de supprimer les étapes de reformage et de transformation du CO par RWGSR. Pour réaliser les électrolyses ; on utilisera, par exemple, de l'électricité dite « bas carbone » (provenant du nucléaire ou des énergies renouvelables).

Les gaz incondensables peuvent également être utilisés pour apporter de la chaleur au procédé, via, par exemple, une chaudière à gaz. La chaudière fonctionne, avantageusement, tout ou en partie avec les gaz issus du procédé.

Il peut également s'agir d'une chaudière fonctionnant avec la biomasse, ce qui, en plus d'apporter de l'énergie au fonctionnement de certaines étapes du procédé, de valoriser du gaz en CH4.

## Revendications

1. Procédé d'obtention d'un biobrut à partir d'une biomasse comprenant au moins les étapes successives suivantes :
a) étape de pyrolyse de la biomasse, à une température allant de 400°C à 550°C, conduisant à la formation de trois fractions : un résidu carboné, une phase gazeuse incondensable, et une bio-huile,
b) étape de mélange du résidu carboné et de la bio-huile, obtenus à l'étape a), de manière à former une suspension,
c) étape d'hydroliquéfaction de la suspension, en présence de dihydrogène, à une température allant de 250°C à 450°C et sous une pression de 10MPa à 25MPa, moyennant quoi on obtient un biobrut.

2. Procédé selon la revendication 1, dans lequel l'étape c) est réalisée sans solvant.

3. Procédé selon l'une des revendications 1 et 2, dans lequel l'étape c) est réalisée sans catalyseur.

4. Procédé selon l'une des revendications 1 et 2, dans lequel l'étape c) est réalisée avec un catalyseur.

5. Procédé selon l'une des revendications précédentes, dans lequel la température de l'étape c) va de 300°C à 350°C.

6. Procédé selon l'une quelconque des revendications précédentes, dans lequel la pyrolyse de l'étape a) dure de 0,5 à 10 secondes.

7. Procédé selon l'une quelconque des revendications précédentes, dans lequel la température de l'étape de pyrolyse est de 500°C.

8. Procédé selon l'une quelconque des revendications précédentes, **caractérisé en ce que** le biobrut obtenu à l'étape c) est soumis à une étape d) de raffinage de manière à être raffiné en biocarburant.

9. Procédé selon la revendication 8, **caractérisé en ce que** l'étape de raffinage produit des gaz légers et **en ce qu'**au moins une partie des gaz légers est recyclée vers l'étape de pyrolyse.

10. Procédé selon la revendication 8, **caractérisé en ce que** l'étape de raffinage produit des gaz légers et **en ce qu'**au moins une partie des gaz légers est soumise à une étape de craquage et/ou de reformage, moyennant quoi on forme du dihydrogène pouvant être recyclé vers l'étape d'hydroliquéfaction.

11. Procédé selon l'une quelconque des revendications précédentes, **caractérisé en ce que** la phase gazeuse incondensable obtenue à l'étape a) comprend du méthane et des hydrocarbures légers et **en ce que** le méthane et les hydrocarbures légers sont soumis à une étape de craquage et/ou de reformage, moyennant quoi on forme du dihydrogène pouvant être recyclé vers l'étape d'hydroliquéfaction.

12. Procédé selon l'une quelconque des revendications précédentes, **caractérisé en ce qu'**au moins une partie du dihydrogène utilisé pour l'étape d'hydroliquéfaction provient d'une électrolyse de l'eau.

13. Procédé selon l'une quelconque des revendications précédentes, **caractérisé en ce que** la suspension soumise à l'étape d'hydroliquéfaction est constituée du char, de la bio-huile et, éventuellement, d'un solvant.
